# EUROPEAN PATENT APPLICATION

(11) **EP 4 588 662 A1**
(43) Date of publication of application: **23.07.2025**
(21) Application number: 22969649.7
(22) Date of filing: 29.12.2022
(51) Int. Cl.: B32B 27/34, B32B 27/32, B32B 27/08, B32B 27/18, B32B 27/20, B32B 27/22, B32B 7/12, B29C 48/21, C08L 77/06, C08L 77/02, C08L 23/08, B29C 48/09

(54) **MULTI-LAYER COMPOSITE PIPELINE MATERIAL AND PREPARATION METHOD THEREFOR**

(71) Applicant: Wanhua Chemical (Ningbo) Co., Ltd, Ningbo, Zhejiang 315812 (CN)
(72) Inventor: SONG, Lin, Ningbo, Zhejiang 315812 (CN); XUE, Yanchao, Ningbo, Zhejiang 315812 (CN); SHAO, Youguo, Ningbo, Zhejiang 315812 (CN); SUI, Yang, Ningbo, Zhejiang 315812 (CN); XIA, Chengzhi, Ningbo, Zhejiang 315812 (CN); LI, Dingyao, Ningbo, Zhejiang 315812 (CN); WANG, Wenbo, Ningbo, Zhejiang 315812 (CN); PAN, Yongjun, Ningbo, Zhejiang 315812 (CN)
(74) Representative: Potter Clarkson
(86) International application number: PCT/CN2022/143224
(87) International publication number: WO 2024/138498

(57) **Abstract**

A multi-layer composite pipeline material and a method for preparing same. The pipeline material comprises the following layers: I. an outer layer made of a polyamide composition (A), wherein the polyamide composition (A) at least comprises a semi-crystalline polyamide (A1); II. an inner layer made of a polyolefin composition (B), wherein the polyolefin composition (B) at least comprises a copolymerized polyethylene (B1); and III. a modified polyolefin material (C) which serves as a bonding layer, is an olefin polymer modified by a polar group and is used for bonding the outer layer I and the inner layer II. The multi-layer composite pipeline material has excellent high temperature resistance and long-term service performance, relatively good strength and low-temperature toughness, and good resistance to media, and can be processed into pipelines of different shapes, broadening the application range of pipelines.

## Description

### TECHNICAL FIELD

The present disclosure belongs to the technical field of multi-layer pipes, and particularly relates to a multi-layer composite pipeline material and a method for preparing same.

### BACKGROUND

At present, a material applied to a cooling pipe on an automobile is generally EPDM, a TPV material, and a nylon 12 material. A cooling pipe made of a rubber material has a wall thickness of generally more than 4 mm. Its application to the automobile may lead to an increase in a weight of an entire pipeline system, and it is prone to aging in long term service. It may seriously increase fuel consumption of 100 kilometers of the automobile as well as power consumption. Meanwhile, it may also occupy a very large space, which is not conducive to a layout of the cooling pipeline. While a cooling pipe made of single-layer nylon 12 has issues with hydrolysis resistance, which leads to excessive water vapor infiltration. There may be certain hidden dangers in a new energy automobile.

Some improvements have also been attempted in the field for existing defects. For example:
Patent document CN1906022A discloses a multi-layer structure pipeline. An inner layer is a polypropylene material. An intermediate layer is a bonding layer. An outer layer is a polyamide material. The pipeline structure is good for hydrolysis resistance. But low-temperature brittleness resistance of the polypropylene material is poor, which may lead to poor low-temperature resistance of a multi-layer structure pipeline material. At the same time, after the PP material is resistant to media, a workpiece may generate a microscopic crack, which is prone to leading to a failure of the pipeline.

Patent document CN108343790A discloses a pipeline of a multi-layer structure, with an ethylene-propylene-diene monomer as an inner layer, a polypropylene-based modified ethylene-propylene-diene monomer as an intermediate layer, and modified nylon 12 as an outer layer. The structure can improve a wall thickness of the pipeline, while greatly reducing the weight of an originally used rubber pipeline. But the pipeline of the multi-layer structure is not high in bursting pressure. At the same time, heat resistance of the rubber material is not high, causing a limitation on an application.

In view of this, there is an urgent need to develop a multi-layer pipeline for a (e.g., automobile) cooling system to solve currently existing problems of poor high and low temperature resistance, poor hydrolysis resistance, and high bursting.

### SUMMARY OF THE INVENTION

An objective of the present disclosure is to provide a multi-layer composite pipeline material and a method for preparing same in response to problems existing in an existing multi-layer pipeline for a (e.g., automobile) cooling system. Copolymerized polyethylene with a wide molecular weight distribution, a high content of comonomers and many macromolecular chain blocks is used as an inner layer to obtain a three-layer pipeline structure, which can improve high temperature resistance and long-term service performance of the pipeline. In addition, a polyamide material of an outer layer gives the pipeline better strength and low-temperature toughness, and good resistance to media. More importantly, it can further make the pipeline higher in elongation at break and smaller in internal stress. The pipeline material may be processed into pipelines in different shapes, which broadens a scope of use of the pipeline material.

In order to implement the above objective, the present disclosure provides the following technical solutions.

In a first aspect, a multi-layer composite pipeline material is provided, including the following layers:
I. an outer layer made of a polyamide composition (A), wherein the polyamide composition (A) at least includes a semi-crystalline polyamide (A1), and each nitrogen atom thereof has an average carbon atom number (Nc) between 8 and 18 (e.g., 10, 11, 14, and 16), preferably between 9 and 12;
II. an inner layer made of a polyolefin composition (B), wherein the polyolefin composition (B) at least includes a copolymerized polyethylene (B 1); and
III. a modified polyolefin material (C) which serves as a bonding layer, is an olefin polymer modified by a polar group and is used for bonding the outer layer I and the inner layer II.

According to the multi-layer composite pipeline material provided by the present disclosure, in some implementations, the copolymerized polyethylene (B1) has a molecular weight (Mw) of 150,000 to 400,000 (e.g., 160000, 180000, 200000, 250000, 300000, and 350000) and a molecular weight distribution of 10 to 25 (e.g., 11, 12, 14, 16, 18, 20, 22, and 24).

In some implementations, the copolymerized polyethylene (B1), at 190°C and 5 kg, has a melt index of 0.2 g/10 min to 1.5 g/10 min, e.g., 0.3 g/10 min, 0.4 g/10 min, 0.5 g/10 min, 0.8 g/10 min, 1.0 g/10 min, and 1.2 g/10 min, a density of 0.93 g/cm³ to 0.97 g/cm³ (e.g., 0.94 g/cm³, 0.95 g/cm³, and 0.96 g/cm³), a crystallinity less than 70% (e.g., 10%, 20%, 30%, 50%, 60%, and 65%), and a melting point of 120°C to 140°C (e.g., 125°C and 130°C).

In some implementations, the copolymerized polyethylene (B1) is a copolymer formed by ethylene and one or more of α-olefins. Entanglement of a chain block of the material is improved by introduction of comonomers, which promotes formation of tie molecules.

In some implementations, the α-olefins are selected from the group consisting of olefin monomers of C2 to C12, and preferably selected from the group consisting of olefin monomers of C4 to C8 (e.g., 1-butene, 1-hexene, 4-methyl-1-pentene, and 1-octene).

Long-term service performance of the copolymerized polyethylene material is determined by an amorphous region and a crystalline phase together. While from a microscopic point of view, avoidance of performance degradation mainly comes from entanglement of the crystalline phase and the amorphous region. When an entanglement network formed by branched molecules in the crystalline phase and the amorphous region becomes complete, the long-term performance thereof is also more excellent. In a process of a long-term service, lamellas and lamellas are connected by a tie molecular chain in the amorphous region. When two adjacent lamellas are subjected to external stretch action, the tie molecular chain generates an enough internal stress to resist an external force on the lamellas, thus hindering deformation of the lamellas as well as further decomposition. At this time, the material is not prone to a chain scission because of disentanglement of the molecular chain. In a process that the copolymerized polyethylene material expands from a craze to a crack, the internal stress generated by the tie molecular chain resists the external stress on the lamellas. The lamellas and the tie molecular chain form a macromolecular network under the action of the sustained external stress so as to resist the overall deformation and damage. Finally, the macromolecular network loosens when exceeding a range of bearing stress, and mechanical performance decreases. Therefore, a key to the long-term service performance of the copolymerized polyethylene material lies in a molecular connection between the lamellas.

The connection between the lamellas relies on the tie molecules, and a magnitude of the stress that the tie molecule chain can bear is related to its number and distribution, which presents an overall magnitude of the molecular weight of the material as well as a width of the molecular weight distribution. Compared with conventional polyethylene or polypropylene, the inventor selects the copolymerized polyethylene and takes advantage of its characteristic of the wide molecular weight distribution. Macromolecular and micromolecular chain blocks are included. The micromolecular chain block acts as mobility of the macromolecular chain block. It is possible to improve processability of the polymer while taking into account the mechanical performance, i.e., when the material is processed, both the performance of the material and the processability are improved. The molecular weight distribution shows a typical bimodal or trimodal distribution.

In some implementations, a content of comonomers in the copolymerized polyethylene (B1) is 1wt% to 5 wt% (e.g., 1.5 wt%, 2.0 wt%, 2.5 wt%, 3.0 wt%, 4.0 wt%, and 4.5 wt%) by total weight of the copolymerized polyethylene (B 1).

In some implementations, a content of the copolymerized polyethylene (B1) ranges from 80wt% to 99 wt%, e.g., 82 wt%, 85 wt%, 90 wt%, 95 wt%, and 98 wt% by total weight of the polyolefin composition (B).

In some implementations, the polyolefin composition (B) further includes the following components:
an antioxidant (B2), 0.3 wt% to 1.2 wt% (e.g., 0.4 wt%, 0.6 wt%, 0.8 wt%, and 1.0 wt%);
a lubricant (B3), 0 to 0.5 wt% (e.g., 0.1 wt%, 0.2 wt%, 0.3 wt%, and 0.4 wt%);
a filler (B4), 0 to 15 wt% (e.g., 0.5 wt%, 1 wt%, 4 wt%, 6 wt%, 8 wt%, 10 wt%, and 12 wt%); and
other auxiliaries (B5), 0 to 15 wt% (e.g., 0.5 wt%, 1 wt%, 4 wt%, 8wt%, and 12 wt%).

The multi-layer composite pipeline material of the present disclosure will be used in a variety of environments (e.g., long-term aging resistance, water resistance, and alcohol resistance). The selection of a thermal aging agent needs to be able to meet a characteristic of playing its role sustainably over a long term, and it does not precipitate in a medium (e.g., a coolant), so as to achieve more excellent long-term service performance. Although the antioxidant may be added to a polyolefin matrix as a conventional auxiliary, not all antioxidants are able to implement the objective of the present disclosure.

In some implementations, the antioxidant (B2) is a precipitation-resistant type antioxidant, and is preferably selected from one or more of the group consisting of an aromatic amine antioxidant, a sterically hindered phenol antioxidant, a sulphur-containing synergist, and a hydroxylamine benzofuranone derivative. For example, the antioxidant may be an antioxidant 1330, an antioxidant 1790, Irganox1098, and Irganox168.

In some implementations, the lubricant (B3) is selected from one or more of the group consisting of titanic acid ester, stearic acid, erucyl amide, oleamide, and silicone.

In some implementations, the filler (B4) is selected from the group consisting of inorganic fillers or organic fillers, and preferably selected from one or more of the group consisting of silica, talc powder, wollastonite, and calcium carbonate.

The other auxiliaries (B5) may include, but are not limited to, one or more of a flame retardant, an ultraviolet absorber, pigment, a leveling agent, a chain extender, a thermally conductive agent, a conductivity additive, and a toughening agent (e.g., POE). These auxiliaries are conventional auxiliaries in the art and are not repeated here. **In** some implementations, the other auxiliaries (B5) are selected from one or more of the group consisting of a light-aging resistance additive, a leveling agent, and a toughening agent.

For example, the ultraviolet absorber mainly includes one or more of benzoic acid, a benzophenone derivative, and benzotriazole. A light stabilizer mainly includes a hindered amine stabilizer. The two can be compounded and used according to a weight ratio of 0.5 to 2:1.

The semi-crystalline polyamide in layer I may be prepared by diamine and dicarboxylic acid or prepared by aminocarboxylic acid or corresponding lactam. Each nitrogen atom of a semi-crystalline polyamide resin prepared by lactam contains at least 8 carbon atoms. In a case of a combination of the diamine and the dicarboxylic acid, an arithmetic mean value of carbon atoms in a mixed component of the diamine and the dicarboxylic acid is at least 8.

Examples of appropriate semi-crystalline polyamides include, but are not limited to, one or more of PA1012 (prepared by decanediamine containing 10 carbon atoms and dodecanedioic acid containing 12 carbon atoms), PA12 (dodecanediamide polycondensation), PA612, PA610, PA614, PA11, PA1212, PA614, PA616, PA618, etc., e.g., Wanamid L3000 and Wanamid L2000.

According to the multi-layer composite pipeline material provided by the present disclosure, in some implementations, the semi-crystalline polyamide (A1) is selected from one or more of the group consisting of PA1012, PA12, PA612, PA610, PA614, PA1212, PA614, PA616, and PA618.

In some implementations, by total weight of the polyamide composition (A), a content of the semi-crystalline polyamide (A1) is greater than or equal to 50 wt% (e.g., 55 wt%, 60 wt%, 75 wt%, 85 wt%, and 95 wt%), preferably in a range from 70 wt% to 99 wt%, more preferably in a range from 80 wt% to 99 wt%.

In some implementations, the polyamide composition (A) further includes: one or more of an impact modifier (A2), a plasticizer (A3), and an additive component (A4).

In some implementations, by total weight of the polyamide composition (A), wherein:
a content of the impact modifier (A2) is in a range from 0 to 25 wt% (e.g., 0.5 wt%, 1 wt%, 4 wt%, 5 wt%, 10 wt%, 12 wt%, and 15 wt%), preferably in a range from 3 wt% to 20 wt%, more preferably in a range from 3 wt% to 10 wt%.
a content of the plasticizer (A3) is in a range from 0 to 20 wt% (e.g., 0.5 wt%, 1 wt%, 4 wt%, 10 wt%, and 18 wt%), preferably in a range from 1 wt% to 15 wt%, more preferably in a range from 2 wt% to 12 wt%.

A content of the additive component (A4) is in a range from 0 to 5 wt% (e.g., 0.5 wt%, 1.5 wt%, 2 wt%, and 4 wt%), preferably in a range from 1 wt% to 3 wt%.

**In** some implementations, the impact modifier (A2) is an elastomer copolymer, preferably selected from one or more of the group consisting of an ethylene/butene copolymer, an ethylene/hexene copolymer, an ethylene/octene copolymer, an ethylene/alkyl (meth)acrylate copolymer, an ethylene/styrene/butadiene copolymer, a diblock/triblock copolymer of styrene/butadiene, and a diblock/triblock copolymer of ethylene-propylene.

The impact modifier (A2) is a modified copolymer. An optional modified functional group includes one or more of anhydride, epoxy group, halogen, carboxyl, amino, hydroxyl, and derivatives thereof. Appropriate examples include, but are not limited to, N493 (graft maleic anhydride), SOG-03 (a graft polymer containing a GMA functional group, and a graft epoxy group), and MD715 (graft maleic anhydride). In some implementations, the elastomer copolymer contains a polar functional group, and the polar functional group is preferably selected from one or more of the group consisting of anhydride, epoxy group, halogen, carboxyl, amino, hydroxyl, and derivatives thereof.

The plasticizer (A3) may be C1-C20 ester of p-hydroxybenzoic acid or amide generated by aryl sulfonic acid and C2-C12 amine. Appropriate examples include, but are not limited to, one or more of P-benzenesulfonamide, N-butylbenzenesulfonamide (BBSA), methyl p-hydroxybenzoate, N-methylbenzenesulfonamide, ethyl p-hydroxybenzoate, octyl p-hydroxybenzoate, isohexadecyl p-hydroxybenzoate, methylbenzenesulfonic acid-n-octyl amide, benzenesulfonic acid-n-butyl amide, and benzenesulfonic acid-2-ethylhexyl amide.

The additive component (A4) may include, but is not limited to, one or more of an antioxidant, an ultraviolet absorber, a light stabilizer, a lubricant, a flame retardant, pigment, a leveling agent, a chain extender, a thermally conductive agent, a conductivity additive, and other thermoplastics.

For example, the ultraviolet absorber mainly includes one or more of benzoic acid, a benzophenone derivative, and benzotriazole. The light stabilizer mainly includes a hindered amine stabilizer. The two can be compounded and used according to a weight ratio of 0.5 to 2:1.

For example, the lubricant may be one or more of calcium stearate, zinc stearate, polyethylene wax, and ethylene distearate amine.

For example, the antioxidant may include an antioxidant used alone or a mixture of antioxidants used in combination with each other. As a specific implementation, the antioxidant may include one or more of a phenolic antioxidant, a phosphite antioxidant, cuprous iodide (CuI), and potassium iodide (KI).

According to the multi-layer composite pipeline material provided by the present disclosure, in some implementations, in the modified polyolefin material (C), the polar group which serves as a modifying functional group is selected from one or more of the group consisting of anhydride, carboxyl, amino, hydroxyl, and derivatives thereof.

In some implementations, a content of the polar group ranges from 0.1 wt% to 2.0 wt% (e.g., 0.15 wt%, 0.3 wt%, 0.5 wt%, 1.0 wt%, 1.5 wt%, and 1.8 wt%).

Layer III is the modified polyolefin material (C). The modified polyolefin is obtained by modification based on C2 to C12 olefins in a branched or unbranched form or a mixture thereof, and may be selected from the group consisting of polyethylene, polypropylene, etc. The modified polyolefin material may be prepared by modifying at least one monomer selected from the group consisting of the following: maleic anhydride, glycidyl acrylate, glycidyl methacrylate, acrylic acid, methacrylic acid, and vinyl acetate for grafting or copolymerization modification. The polyolefin material modified by the polar monomer is utilized as the bonding layer, taking into account bonding performance between the inner layer and the outer layer. The inner layer achieves bonding action of a chemical bond through the entanglement of chain blocks between the modified polyolefin material and polarity shared by the olefin polymer. The outer material then achieves bonding action of a chemical bond with the polyamide composition via the graft polar functional group, thereby achieving bonding of the three layers of materials, and improving the moldability of a multi-layer composite pipeline.

According to the multi-layer composite pipeline material provided by the present disclosure, in some implementations, the multi-layer composite pipeline material has an outer diameter ranging from 4 mm to 30 mm (e.g., 5 mm, 10 mm, 15 mm, 20 mm, and 25 mm), preferably an outer diameter ranging from 8 mm to 24 mm, and a wall thickness ranging from 0.6 mm to 3 mm (e.g., 0.8 mm, 1.2 mm, 1.5 mm, 2.2 mm, and 2.5 mm), preferably a wall thickness ranging from 1 mm to 2 mm.

The outer layer I made of the polyamide composition (A) has a wall thickness which is not exceeding 80% (e.g., 10%, 25%, 40%, 60%, and 75%) of a total wall thickness of the multi-layer composite pipeline material, preferably is in a range from 20% to 70% of the total wall thickness of the multi-layer composite pipeline material, and more preferably is in a range from 30% to 50% of the total wall thickness of the multi-layer composite pipeline material.

The modified polyolefin material (C) which serves as the bonding layer III has a wall thickness which is not exceeding 20% (e.g., 1%, 4%, 8%, 12%, 15%, and 18%) of the total wall thickness of the multi-layer composite pipeline material, preferably is in a range from 10% to 20% of the total wall thickness of the multi-layer composite pipeline material.

In some implementations, the multi-layer composite pipeline material is an oriented smooth multi-layer pipe which has a draw down ratio in an extrusion direction of less than 1:5 (e.g., 1:1, 1:2, 1:2.5, 1:3, 1:3.5, and 1:4.5), preferably a draw down ratio in the extrusion direction ranging from 1:1.5 to 1:4. In the text, the involved draw down ratio of less than 1:5 refers to that "1" represents a sectional area of a pipeline port after extrusion molding, and "5" represents a sectional area of the pipeline when it is first extruded at a head of a multi-layer co-extrusion device.

In a second aspect, a method for preparing the multi-layer composite pipeline material as described above is provided. The polyamide composition (A) is used as an outer layer. The polyolefin composition (B) is used as an inner layer. The modified polyolefin material (C) is used as an intermediate layer bonding the outer layer and the inner layer. Process of pipeline molding is performed by a multi-layer co-extrusion device, and the multi-layer composite pipeline material is prepared.

In the present disclosure, the polyamide composition (A) and the polyolefin composition (B) may both achieve pelletization via a screw extrusion process. Both an extrusion device and an extrusion process are conventional selections in the art and are not repeated here. Both the involved multi-layer co-extrusion device and multi-layer co-extrusion process are also conventional selections in the art and are not repeated here.

In the method for preparing the multi-layer composite pipeline material, for example, a wall thicknesses of each layer and the total wall thickness of the multi-layer composite pipeline may be controlled by an extrusion amount of each layer of the material in the extrusion process.

In the extrusion processing process, a smooth pipe, a corrugated pipe, a special-shaped pipe, etc. may be extruded and molded according to different application needs. This multi-layer composite pipeline of the present disclosure may be applied to a fluid transportation pipeline, such as a cooling pipe, a drain pipe, an air brake pipe, an oil delivery pipe, and other medium-resistant pipelines.

The multi-layer composite pipeline material described in the present disclosure may achieve a multi-layer structure via a co-extrusion method. The composition containing the copolymerized polyethylene material is selected as the inner layer of the multi-layer structure. Through structural characteristics of the copolymerized polyethylene material as well as the improvement of its performance in terms of both long-term heat resistance and medium resistance, the multi-layer composite pipeline material has performance advantages in certain application scenarios. The polyamide material is selected for the outer layer. The semi-crystalline polyamide material itself has excellent strength and low-temperature toughness, which makes the multi-layer composite pipeline be well protected as a whole. Meanwhile, in combination with the preferred pipeline draw down ratio, a certain degree of orientation can be achieved by controlling the draw down ratio. The appropriate draw down ratio is conducive to crystal refinement of the material in a system in the extrusion processing process, so as to improve the material performance (such as good performance in hydrolysis resistance, long-term temperature resistance, etc.), and at the same time helps to achieve a stable extrusion processing process (focusing on dimensional and appearance stability of the pipeline material).

Compared with the prior art, the technical solution of the present disclosure has the following beneficial effects.

Through a layer structural arrangement of the multi-layer composite pipeline and the selection of the appropriate materials for each layer on the basis of the layer structural arrangement, and in combination with the appropriate pipeline stretching ratio, it is possible to make the obtained three-layer composite pipeline material have excellent high temperature resistance, hydrolysis resistance, long-term service performance, good resistance to media (coolant), as well as excellent low-temperature resistant toughness.

The polyolefin composition (B) is used as the inner layer of the pipeline, the polyamide composition (A) is used as the outer layer, and thus the polyolefin composition (B) contains the copolymerized polyethylene component having a wide molecular weight distribution, a high content of comonomers, and a large number of macromolecular chain blocks, so that the long-term service performance of the pipeline material can be improved. At the same time, in the pipeline extrusion process, the pipeline is subjected to the appropriate draw down ratio, so that crystals of the material achieve refinement, playing a positive role in the improvement of the overall performance of the material.

An aliphatic polyamide material of the outer layer, due to its own long-chain structure, has a low density of amide bonds, making the material have excellent resistance to environmental corrosion, resistance to salt spray and debris impact, and other performance. The prepared pipeline material may ensure that application requirements can be met in different environment.

By introducing the polyolefin material (C) modified by the polar group as the bonding layer, through entanglement of a cooling chain block of the polymer material as well as improvement of the polar functional group, a microscopic bonding force between the materials of various layers is improved, thus achieving effective bonding of the materials of the inner and outer layers, and preventing a separation phenomenon in a use process of the pipeline.

### DETAILED DESCRIPTION

In order to be able to understand technical features and contents of the present disclosure in detail, preferred implementations of the present disclosure are described in more detail below. Although the preferred implementations of the present disclosure are described in embodiments, it should be understood that the present disclosure may be implemented in various forms but should not be limited to the implementations set forth herein.

### <Sources of raw materials>

The sources of the main raw materials used in various embodiments are shown in Table 1.

**Table 1 Sources of main raw materials**

| Marks of raw materials | Types of materials | Vendors |
|---|---|---|
| WanamidL3000 | Polyamide | Wanhua Chemical Group Co., Ltd |
| DMVO | Polyamide | Akema Chemical Company |
| FUSABONDN493 | Impact modifier | Dow Chemical Company |
| Butylbenzenesulfonamide | Plasticizer | Jinzhong Chemical |
| Copolymerized polyethylene PE-a/b/c/d/e/f/g | Copolymerized polyethylene | Self-made |
| 1330 | Antioxidant | BASF SE |
| 1790 | Antioxidant | BASF SE |
| Irganox 1098 | Antioxidant | BASF SE |
| Irganox 168 | Antioxidant | BASF SE |
| Irganox 1010 | Antioxidant | BASF SE |
| UV770 | Light stabilizer | BASF SE |
| Black masterbatch | Color masterbatch | Cabot Company |
| Engage 7467 | Toughening agent | Dow Chemical Company |
| Zinc stearate | Lubricant | Hongyuan Chemical Ltd. |
| PP matrix: QB510 | Bonding layer (HV1#) | Mitsui Chemicals |
| PE matrix: CMG5804 | Bonding layer (HV2#) | Fine-blend Polymers Ltd. |

A preparation example for the copolymerized polyethylene is shown below.

A copolymerized polyethylene (B1) matrix resin contained in the polyolefin composition (B) described in the present disclosure may be prepared by a multistage copolymerization method, i.e., in corresponding reactors of various stages, a reaction product of a previous stage (which contains a catalyst) is transferred to a reactor of a next reaction stage to continue a reaction.

In reactions of the reactors of various stages, configurations are performed with different reaction conditions, different material addition ratios or material types to prepare an ethylene copolymerized polymer containing two or more components. For specific reaction materials and reaction conditions, please see Table 2.

**Table 2 Reaction materials and reaction conditions for copolymerized polyethylene**

| **Preparation example** | **First reactor** | **Second reactor** | **Third reactor** |
|---|---|---|---|
| Preparation example 1 (PE-a) | 99.96% ethylene, 0.04% hydrogen, Z-N catalyst: 1.6 mol/l; reaction temperature: 79°C, reaction pressure: 0.7 MPa | 98.7% ethylene, reaction temperature: 81°C, reaction pressure: 0.2 MPa, copolymerized hexene: 1.3% | 98.7% ethylene, 0.05% hydrogen, reaction temperature: 81°C, reaction pressure: 0.2 MPa, copolymerized hexene: 0.8% |
| Preparation example 2 (PE-b) | 99.99% ethylene, 0.01% hydrogen, Z-N catalyst: 2.0 mol/l; reaction temperature: 83°C, reaction pressure: 0.9 MPa | 92.6% ethylene, reaction temperature: 85°C, reaction pressure: 0.24 MPa, copolymerized hexene: 7.4% | 94.2% ethylene, reaction temperature: 85°C, reaction pressure: 0.24 MPa, copolymerized hexene: 5.8% |
| Preparation example 3 (PE-c) | 99.9% ethylene, 0.1% hydrogen, Z-N catalyst: 1.8 mol/l; reaction temperature: 83°C, reaction pressure: 0.9 MPa | 94.6% ethylene, reaction temperature: 84°C, reaction pressure: 0.24 MPa, copolymerized hexene: 5.4% | 95.1% ethylene, 0.01% hydrogen, reaction temperature: 84°C, reaction pressure: 0.24 MPa, copolymerized hexene: 4.89% |
| Preparation example 4 (PE-d) | 99.95% ethylene, 0.05% hydrogen, Z-N catalyst: 1.85 mol/l; reaction temperature: 83°C, reaction pressure: 0.9 MPa | 94.6% ethylene, reaction temperature: 85°C, reaction pressure: 0.24 MPa, copolymerized butene: 5.4% | 95.1% ethylene, 0.01% hydrogen, reaction temperature: 85°C, reaction pressure: 0.24 MPa, copolymerized butene: 4.9% |
| Preparation example 5 (PE-e) | 99.95% ethylene, 0.05% hydrogen, Z-N catalyst: 1.85 mol/l; reaction temperature: 83°C, reaction pressure: 0.9 MPa | 94.6% ethylene, reaction temperature: 85°C, reaction pressure: 0.24 MPa, copolymerized butene: 5.4% | 95.1% ethylene, 0.01% hydrogen, reaction temperature: 85°C, reaction pressure: 0.24 MPa, copolymerized hexene: 4.9% |
| Preparation example 6 (PE-f) | 99.9% ethylene, 0.1% hydrogen, Z-N catalyst: 1.8 mol/l; reaction temperature: 83°C, reaction pressure: 0.9 MPa | 94.0% ethylene, reaction temperature: 84°C, reaction pressure: 0.25 MPa, copolymerized hexene: 6.0% | 94.9% ethylene, 0.02% hydrogen, reaction temperature: 84°C, reaction pressure: 0.25 MPa, copolymerized hexene: 5.08% |
| Comparative preparation example 1 (PE-g) | 99.95% ethylene, 0.05% hydrogen, Z-N catalyst: 1.85 mol/l; reaction temperature: 83°C, reaction pressure: 0.9 MPa | 100% ethylene, reaction temperature: 85°C, reaction pressure: 0.23 MPa | 99.8% ethylene, 0.02% hydrogen, reaction temperature: 85°C, reaction pressure: 0.23 MPa |

Performance of the copolymerized polyethylene (B1) prepared by the above preparation method is shown in Table 3 below.

**Table 3 Performance of obtained copolymerized polyethylene**

| Preparation example | Molecular weight | Molecular weight distribution | Type of comonomer | Content of comonomer, wt% |
|---|---|---|---|---|
| PE-a | 150,000 | 10 | Hexene | 1 |
| PE-b | 400,000 | 25 | Hexene | 5 |
| PE-c | 250,000 | 15 | Hexene | 3 |
| PE-d | 250,000 | 15 | Butene | 3 |
| PE-e | 250,000 | 15 | Hexene and butene | 3 |
| PE-f | 250,000 | 25 | Hexene | 4 |
| PE-g | 250,000 | 15 | None | None |

### Preparation of polyolefin composition (B)

The copolymerized polyethylene (B1) matrix resin obtained by the above preparation method, as well as other various components, are weighed as raw materials according to information on the types of components and dosages (by weight) shown in Table 4, and mixed in a high-efficiency mixer for 5 min. A mixed blend is extruded through a twin-screw extruder for pelletizing. A screw diameter of the twin-screw extruder is 35 mm. A length-to-diameter ratio of an extrusion screw is 48. An extrusion rotational speed is 450 rpm/min.

Then processing and pelletizing are performed by the twin-screw extruder to prepare the polyolefin composition (B) as the inner layer. Products are labeled as PE1# to PE8# respectively.

**Table 4 Types and ratios (by weight) of components in polyolefin composition (B)**

| Type | PE1# | PE2# | PE3# | PE4# | PE5# | PE6# | PE7# | PE8# |
|---|---|---|---|---|---|---|---|---|
| PE-a | 98 | | | | | | | |
| PE-b | | 98 | | | | | | |
| PE-c | | | 93 | | | | | |
| PE-d | | | | 98 | | | | 98 |
| PE-e | | | | | 98 | | | |
| PE-f | | | | | | 90 | | |
| PE-g | | | | | | | 98 | |
| Engage 7467 | | | | | | 8 | | |
| SiO₂ | | | 5 | | | | | |
| 1330 | 0.3 | 0.3 | 0.3 | 0.3 | 0.3 | 0.3 | 0.3 | |
| 1790 | 0.3 | 0.3 | 0.3 | 0.3 | 0.3 | 0.3 | 0.3 | |
| 1010 | | | | | | | | 0.3 |
| UV770 | 0.2 | 0.2 | 0.2 | 0.2 | 0.2 | 0.2 | 0.2 | 0.2 |
| Irganox 168 | 0.2 | 0.2 | 0.2 | 0.2 | 0.2 | 0.2 | 0.2 | 0.2 |
| Black masterbatch | 1 | 1 | 1 | 1 | 1 | 1 | 1 | 1 |

### Preparation of polyamide composition (A)

In the polyamide composition (A) as the outer layer, each component shown in Table 5 below is included. Raw materials are weighed according to components and ratios (by weight) in Table 5, and mixed in a high-efficiency mixer for 5min. The above raw materials are mixed evenly. A mixed blend is extruded through a twin-screw extruder for pelletizing. A screw diameter of the twin-screw extruder is 28mm. A length-to-diameter ratio of an extrusion screw is 40. An extrusion rotational speed is 700 rpm/min. The polyamide composition (A) as the outer layer is prepared by extrusion processing. Products are labeled as PA1# to PA3# respectively.

**Table 5 Components of polyamide composition (A) and dosages thereof (by weight)**

| | PA1# | PA2# | PA3# |
|---|---|---|---|
| Wanamid L3000 | 98.3 | 85.3 | |
| DMVO | | | 87.3 |
| Butylbenzenesulfonamide | | 8 | 8 |
| FUSABOND N493 | | 5 | 3 |
| Irganox 1098 | 0.3 | 0.3 | 0.3 |
| Irganox 168 | 0.2 | 0.2 | 0.2 |
| Zinc stearate | 0.2 | 0.2 | 0.2 |
| Black masterbatch | 1 | 1 | 1 |

### Preparation of multi-layer composite pipeline

The polyolefin composition (B) prepared as above is used as the inner layer. The polyamide composition (A) prepared as above is used as the outer layer. The modified polyolefin material (C) prepared as above is used as the intermediate layer. Pipeline molding is performed by a multi-layer co-extrusion device to obtain the multi-layer composite pipeline, and structures of various layers thereof and performance tests are shown in Table 7. An outer diameter of the pipeline is 8 mm. A wall thickness is 1 mm.

An extrusion line speed of the multi-layer co-extrusion device is 12 m/min. Processing temperatures for various intervals in the multi-layer co-extrusion device are shown in Table 6 below unit: °C).

| **Material** | **Z1** | **Z2** | **Z3** | **Z4** | **Flange** | **H1** | **H2** | **H3** | **H4** | **H5** | **H6** |
|---|---|---|---|---|---|---|---|---|---|---|---|
| Inner layer | 220 | 240 | 240 | 240 | 245 | 245 | 245 | 245 | 245 | 245 | 245 |
| Intermediate layer | 220 | 230 | 230 | 235 | | | | | | | |
| Outer layer | 220 | 240 | 240 | 240 | | | | | | | |

| | | | | | | | | | | | |
|---|---|---|---|---|---|---|---|---|---|---|---|
| Note: In the above table, Z stands for the screw, and H stands for the head. | | | | | | | | | | | |

**Table 7 Structures of various layers of multi-layer composite pipeline and performance test data**

| | Embodiment | | | | | | | | Comparative example | | | |
|---|---|---|---|---|---|---|---|---|---|---|---|---|
| | 1 | 2 | 3 | 4 | 5 | 6 | 7 | 8 | 1 | 2 | 3 | 4 |
| Layer I (outer) Wall thickness/mm | PA1# | PA2# | PA1# | PA3# | PA2# | PA1# | PA3# | PA2# | PA2# | PA3# | PA1# | PA3# |
| | 0.4 | 0.4 | 0.4 | 0.4 | 0.4 | 0.2 | 0.3 | 0.7 | 0.4 | 0.4 | 0.4 | 0.4 |
| Layer III Wall thickness/mm | HV1# | HV1# | HV1# | HV2# | HV1# | HV2# | HV1# | HV1# | HV1# | HV2# | HV1# | HV2# |
| | 0.1 | 0.1 | 0.1 | 0.1 | 0.1 | 0.1 | 0.1 | 0.1 | 0.1 | 0.1 | 0.1 | 0.1 |
| Layer II (inner) Wall thickness/mm | PE1# | PE2# | PE3# | PE4# | PE5# | PE6# | PE1# | PE5# | PE7# | PE7# | PE3# | PE8# |
| | 0.5 | 0.5 | 0.5 | 0.5 | 0.5 | 0.7 | 0.6 | 0.2 | 0.5 | 0.5 | 0.5 | 0.5 |
| Pipeline Draw down ratio | 1:1.5 | 1:2 | 1:2 | 1:2.5 | 1:4 | 1:2.5 | 1:2.5 | 1:2 | 1:2 | 1:2.5 | 1:6 | 1:2.5 |
| Tensile strength (MPa) | 31.2 | 26.8 | 32.5 | 27.5 | 26.7 | 28.1 | 27.8 | 27.4 | 25.1 | 25.8 | 25.4 | 26.8 |
| Low-temperature impact resistance (-40°C) | 0/10 | 0/10 | 0/10 | 0/10 | 0/10 | 0/10 | 0/10 | 0/10 | 1/10 | 1/10 | 0/10 | 0/10 |
| After coolant treatment | 100°C, 1000 h coolant treatment (composed of 50% ethylene glycol and 50% water) | | | | | | | | | | | |
| Tensile strength (MPa) | 29.2 | 25.5 | 30.8 | 26.2 | 24.7 | 26.7 | 25.6 | 25.5 | 22.1 | 23.0 | 22.5 | 22.1 |
| Low-temperature impact resistance (-40°C) | 0/10 | 0/10 | 0/10 | 0/10 | 0/10 | 0/10 | 0/10 | 0/10 | 3/10 | 4/10 | 1/10 | 2/10 |

| | | | | | | | | | | | | |
|---|---|---|---|---|---|---|---|---|---|---|---|---|
| Note: A process for testing low-temperature impact toughness is that 10 sample pipes are randomly taken for a falling ball impact experiment. In the table, x/10 represents that x out of 10 pipes fails. For example, 0/10 represents that 0 out of 10 pipes fails, and all the 10 pipes pass the test. | | | | | | | | | | | | |

From results of Embodiments 1-8, it can be seen that through the layer structural arrangement of the multi-layer composite pipeline and the selection of the types of materials applicable to different layers on the basis of the layer structural arrangement, and in combination with the appropriate pipeline stretching ratio, it is possible to make the obtained three-layer composite pipeline material (on which initial performance tests are performed) have relatively good strength and low-temperature impact toughness. After 1000 h of treatment at 100°C in a coolant environment, the stretch strength and impact toughness of the pipeline still remain good, with a very small extent of decrease in performance, reflecting the excellent high-temperature resistance, long-term service performance and good resistance to media (coolant) of the multi-layer pipeline material.

Compared with Embodiments 2 and 4, Comparative Examples 1-2 select a polyethylene component not limited by the present disclosure as the inner layer of the pipeline. Under the same processing conditions, initial stretch performance of the prepared multi-layer pipeline is relatively low. Some of pipe fittings are found to be broken in the low-temperature toughness experiment. Furthermore, it is found after the long-term treatment experiment with the coolant that the number of broken pipelines in the low-temperature toughness test of the pipelines is further increased. Thus, it is indicated that the initial stretch strength and low-temperature toughness of the multi-layer pipeline materials of Comparative Examples of 1-2 are not good. Furthermore, after 1000 h of treatment at 100°C in the coolant environment, the impact toughness of the pipeline is further reduced. The pipeline does not have high-temperature resistance, long-term service performance and good resistance to media (coolant), reflecting advantages of the type of copolymerized polyethylene selected by the present disclosure.

Compared with Embodiment 3, the draw down ratio of 1:6 in Comparative Example 3 makes the initial stretch strength of the pipeline lower. The attenuation of the stretch strength of the pipeline is more serious after long-term coolant treatment, which indicates that the draw down ratio limited by the present disclosure is more favorable to the maintenance of the mechanical performance of the pipeline material, and the pipeline material possesses better resistance to media and long-term serviceability.

Compared with Embodiment 4, although the initial performance of the pipeline obtained by Comparative Example 4 is basically comparable, the mechanical performance such as stretch strength and low-temperature toughness of the pipeline prepared therefrom are reduced considerably after long-term coolant treatment due to the selection of the antioxidant 1010 for Comparative Example 4, indicating that the preferred type of antioxidant of the present disclosure provides good advantages for the long-term service performance and good resistance to media (coolant) of the pipeline.

Partial embodiments of the present disclosure have been described above. The above description is illustrative, rather than exhaustive, and is not limited to the various disclosed embodiments. Numerous modifications and alterations are apparent to those ordinarily skilled in the art without departing from the scope and spirit of the illustrated embodiments.

## Claims

1. A multi-layer composite pipeline material, comprising the following layers:
I. an outer layer made of a polyamide composition (A), wherein the polyamide composition (A) at least comprises a semi-crystalline polyamide (A1), and each nitrogen atom thereof has an average carbon atom number (Nc) between 8 and 18, preferably between 9 and 12;
II. an inner layer made of a polyolefin composition (B), wherein the polyolefin composition (B) at least comprises a copolymerized polyethylene (B1); and
III. a modified polyolefin material (C) which serves as a bonding layer, is an olefin polymer modified by a polar group, and is used for bonding the outer layer I and the inner layer II.

2. The multi-layer composite pipeline material according to claim 1, wherein the copolymerized polyethylene (B1) has a molecular weight of 150,000 to 400,000 and a molecular weight distribution of 10 to 25; and/or
the copolymerized polyethylene (B1) has a melt index of 0.2 g/10min to 1.5 g/10min (190°C, 5 kg), a density of 0.93 g/cm³ to 0.97 g/cm³, a crystallinity of less than 70%, and a melting point of 120°C to 140°C; and/or
the copolymerized polyethylene (B1) is a copolymer formed by ethylene and one or more of α-olefins, and the α-olefins are preferably selected from the group consisting of olefin monomers of C2 to C12, and more preferably selected from the group consisting of olefin monomers of C4 to C8; and/or
a content of comonomers in the copolymerized polyethylene (B 1) is 1 wt% to 5wt% by total weight of the copolymerized polyethylene (B 1).

3. The multi-layer composite pipeline material according to claim 1, wherein a content of the copolymerized polyethylene (B1) ranges from 80 wt% to 99 wt% by total weight of the polyolefin composition (B); and/or
the polyolefin composition (B) further comprises the following components:
0.3 wt% to 1.2wt% of an antioxidant (B2),
0 to 0.5wt% of a lubricant (B3),
0 to 15wt% of a filler (B4), and
0 to 15wt% of other auxiliaries (B5);
preferably, the antioxidant (B2) is a precipitation-resistant type antioxidant, and is more preferably selected from one or more of the group consisting of an aromatic amine antioxidant, a sterically hindered phenol antioxidant, a sulphur-containing synergist, and a hydroxylamine benzofuranone derivative;
preferably, the lubricant (B3) is selected from one or more of the group consisting of titanic acid ester, stearic acid, erucyl amide, oleamide, and silicone;
preferably, the filler (B4) is selected from the group consisting of inorganic fillers or organic fillers, and more preferably selected from one or more of the group consisting of silica, talc powder, wollastonite, and calcium carbonate; and
preferably, the other auxiliaries (B5) are selected from one or more of the group consisting of a light-aging resistance additive, a leveling agent, and a toughening agent.

4. The multi-layer composite pipeline material according to claim 1, wherein the semi-crystalline polyamide (A1) is selected from one or more of the group consisting of PA1012, PA12, PA612, PA610, PA614, PA1212, PA614, PA616, and PA618; and/or
wherein, by total weight of the polyamide composition (A), a content of the semi-crystalline polyamide (A1) is greater than or equal to 50wt%, preferably in a range from 70 wt% to 99wt%, more preferably in a range from 80 wt% to 99wt%.

5. The multi-layer composite pipeline material according to claim 1, wherein the polyamide composition (A) further comprises: one or more of an impact modifier (A2), a plasticizer (A3), and an additive component (A4); and/or
by total weight of the polyamide composition (A), wherein:
a content of the impact modifier (A2) is in a range from 0 to 25wt%, preferably in a range from 3 wt% to 20wt%, more preferably in a range from 3 wt% to 10wt%;
a content of the plasticizer (A3) is in a range from 0 to 20wt%, preferably in a range from 1 to 15wt%, more preferably in a range from 2 wt%to 12wt%; and
a content of the additive component (A4) is in a range from 0 to 5wt%, preferably in a range from 1 wt% to 3wt%.

6. The multi-layer composite pipeline material according to claim 5, wherein the impact modifier (A2) is an elastomer copolymer, preferably selected from one or more of the group consisting of an ethylene/butene copolymer, an ethylene/hexene copolymer, an ethylene/octene copolymer, an ethylene/alkyl (meth)acrylate copolymer, an ethylene/styrene/butadiene copolymer, a diblock/triblock copolymer of styrene/butadiene, and a diblock/triblock copolymer of ethylene-propylene; and
the elastomer copolymer contains a polar functional group, and the polar functional group is preferably selected from one or more of the group consisting of anhydride, epoxy group, halogen, carboxyl, amino and hydroxyl, and derivatives thereof.

7. The multi-layer composite pipeline material according to claim 1, wherein in the modified polyolefin material (C), the polar group which serves as a modifying functional group is selected from one or more of the group consisting of anhydride, carboxyl, amino, hydroxyl, and derivatives thereof; and/or
a content of the polar group ranges from 0.1 wt% to 2.0wt%.

8. The multi-layer composite pipeline material according to claim 1, wherein the multi-layer composite pipeline material has an outer diameter ranging from 4 mm to 30 mm, preferably an outer diameter ranging from 8 mm to 24 mm, and a wall thickness ranging from 0.6 mm to 3 mm, preferably a wall thickness ranging from 1 mm to 2 mm; wherein:
the outer layer I made of the polyamide composition (A) has a wall thickness which is not exceeding 80% of a total wall thickness of the multi-layer composite pipeline material, preferably is in a range from 20% to 70% of the total wall thickness of the multi-layer composite pipeline material, and more preferably is in a range from 30% to 50% of the total wall thickness of the multi-layer composite pipeline material; and
the modified polyolefin material (C) which serves as the bonding layer III has a wall thickness which is not exceeding 20% of the total wall thickness of the multi-layer composite pipeline material, preferably is in a range from 10% to 20% of the total wall thickness of the multi-layer composite pipeline material.

9. The multi-layer composite pipeline material according to claim 1, wherein the multi-layer composite pipeline material is an oriented smooth multi-layer pipe which has a draw down ratio in an extrusion direction of less than 1:5, preferably a draw down ratio ranging from 1:1.5 to 1:4.

10. A method for preparing the multi-layer composite pipeline material according to any one of claims 1-9, wherein the polyamide composition (A) is used as an outer layer, the polyolefin composition (B) is used as an inner layer, the modified polyolefin material (C) is used as an intermediate layer bonding the outer layer and the inner layer, process of pipeline molding is performed by a multi-layer co-extrusion device, and the multi-layer composite pipeline material is prepared.
